# EUROPEAN PATENT APPLICATION

(11) **EP 4 810 814 A1**
(43) Date of publication of application: **23.09.2026**
(21) Application number: 25165422.4
(22) Date of filing: 21.03.2025
(51) Int. Cl.: F16D 1/108, F16D 11/00, F16D 1/10

(54) **SPLITABLE CLAW COUPLER**

(71) Applicant: Lay Dynamics Spólka z ograniczona odpowiedzialnoscia, 71-441 Szczecin (PL)
(72) Inventor: Lay, Alain, 64122 Urrugne (FR)
(74) Representative: Kurdubski, Daniel

(57) **Abstract**

A splitable claw coupler comprises two coupling hubs (2), (3), (200), (300) disposed axially opposite one another. They have frontal surfaces (20), (30), (220), (330) which face towards one another and from which claws (21), (31), (221), (331) project perpendicularly. The claws (21), (31), (221), (331) are evenly spaced from each other, forming gaps (22), (32), (222), (232). The claws (21), (31), (221), (331) interlock with each another. One coupling hub (2), (200) consists of a stationary core (23), (223) and a sliding coaxial ring (24), (224) detachably mounted to the core. The ring (24), (224) is arranged to move relative to the core (23), (223) along the axis of a shaft (4) to which said coupling hub (2), (200) is fastened. The core (23), (223) and the ring (24), (224) are attached to each other with at least one bolt connection (25), (250).

## Description

### Filed of the invention

The present invention relates to a splitable claw coupler used to transmit a torque between two shafts aligning with one another, for example, a motor shaft and a transmission shaft, more particularly, to a claw coupler fitted with a pulley and belt system, designed to drive a supercharger or a cooling pump of the engine.

### State of the art

Various types of claw couplings have been used for connecting one shaft aligning with one another, such as between a motor shaft and a transmission shaft, for example. They compensate for the relatively minor misalignments of the shafts that normally occur during their operation.

A conventional flexible claw coupler known from the prior art consists of three distinct parts: two coupling hubs containing protruding jaws or claws, and one elastomer element called a spider. The coupling hubs are mounted on the driveshaft side and on the motor side. The claw or jaws interlock with each other, and the elastomer element is fitted between them. The assembly of the claws or jaws prevents them from moving along the axis.

A patent EP3088757B1 discloses a claw coupling comprising two coupling elements opposite one another and disposed aligned in relation to a longitudinal axis with end face surfaces facing towards one another, from which claws engaging into one another, which are each disposed on circular rings, project alternately in each case. It also comprises a pressure body ring made of elastic material disposed between the two coupling elements, having a ring element as well as pressure bodies projecting radially outwards from the ring element, of which each is received between two adjacent claws of the respective coupling elements.

The Polish patent PL135412B1 discloses the coupler where one of the coupling discs of the toothed type in the form of two concentric rings is provided with corresponding sockets.

In the known claw couplings, there is a problem with the quick and easy disconnection of the hubs. The disengagement of the hubs may be required for the couplers fitted with a pulley and belt system intended to drive the supercharger or cooling pump, in cases where the transmission belt is damaged and needs to be replaced. The quick and effortless disconnection of the coupling hubs is especially important where the hub with a pulley and belt system is implemented in a sports vehicle, such as ski jets or other watercraft.

The Polish patent PL135412B1 discloses the coupler where one of the coupling discs of the toothed type in the form of two concentric rings is provided with corresponding sockets. However, the specification is silent on whether this technical feature solves the technical problem of quick and effortless disconnection of the coupling hubs.

It would therefore be desirable and advantageous to provide an improved claw coupling to address the shortcomings of the prior art.

### Disclosure of the invention

The objective of the present invention is to provide a splitable claw coupler, wherein the coupling hubs can be split from each other in order to form a gap between them, suitable for inserting a transmission belt quickly and effortlessly.

In accordance with the present invention, a splitable claw coupler is provided comprising two coupling hubs disposed axially opposite one another and having frontal surfaces that face towards one another, from which claws project perpendicularly. The claws are evenly spaced from each other, forming gaps arranged for receiving the claws projecting from the opposite disposed coupling hub. The claws interlock with each another. One coupling hub consists of a stationary core and a sliding coaxial ring detachably mounted to the core. The ring comprises the claws that interlock with the claws projecting from the opposing coupling hub. The ring is arranged to move relative to the core along the axis of a shaft to which this coupling hub is fastened. This allows the ring to be moved away from the second coupling hub, resulting in a gap between the hubs suitable for inserting the belt. The core and the ring are attached to each other with at least one bolt connection. This type of fixing provides a simple and reliable splitable connection between corresponding elements.

Preferably, the bolt connection consists of at least two bolts perpendicular to the axis of a shaft and the corresponding threaded holes in the core and ring for receiving the bolts. Additionally, between the core and the ring is a form-fitting connection. This additional connection strengthens the fixing between the core and the ring and counteracts torsional force.

Preferably, the bolt connection consists of at least two bolts parallel to the axis of a shaft and the corresponding threaded grooves in the core and ring for receiving the bolts.

Preferably, the core comprises a flange arranged to limit the movement of the ring along the axis of the shaft. The flange serves as a limitation of the ring's movement along the axis of the shaft in one direction only.

The coupling hub in accordance with the invention, allows for quick disconnection of the hubs of the coupler without the need to move the shaft backwards. To disconnect the interlocking claws and create the space wide enough to remove and insert the belt, one needs only to disengage the core and the ring and then move the ring away from the opposing coupling hub along the shaft. The shaft and the core mounted to it remain in a fixed position.

Further benefits and advantages of the present invention will become apparent after a careful reading of the detailed description with appropriate reference to the accompanying drawings

### Brief description of figures

The present invention is shown by means of exemplary embodiments on a drawing, in which:
Fig. 1 is the exploded view of a claw coupler in accordance with a first embodiment of the invention;
Fig. 2 is the perspective view of a claw coupler in accordance with a first embodiment of the invention;
Fig. 3 is the front cross-sectional view of the coupling hub consisting of the core and the ring in accordance with a first embodiment of the invention;
Fig. 4 is the cross-sectional view of the coupling hub in accordance with a first embodiment of the invention, where the ring is fixed to the core in a default position;
Fig. 5 is the cross-sectional view of the coupling hub in accordance with a first embodiment of the invention, where the ring is shifted along the axis of the shaft;
Fig. 6 is the exploded view of a claw coupler in accordance with a second embodiment of the invention;
Fig. 7 is the cross-sectional perspective view of the coupling hub, consisting of the core and the ring in accordance with a second embodiment of the invention;
Fig. 8 is the cross-sectional view of the coupling hub in accordance with a second embodiment of the invention, where the ring is fixed to the core in a default position;
Fig. 9 is the cross-sectional view of the coupling hub in accordance with a second embodiment of the invention, where the ring is shifted along the axis of the shaft.

### Detailed description of preferred embodiments

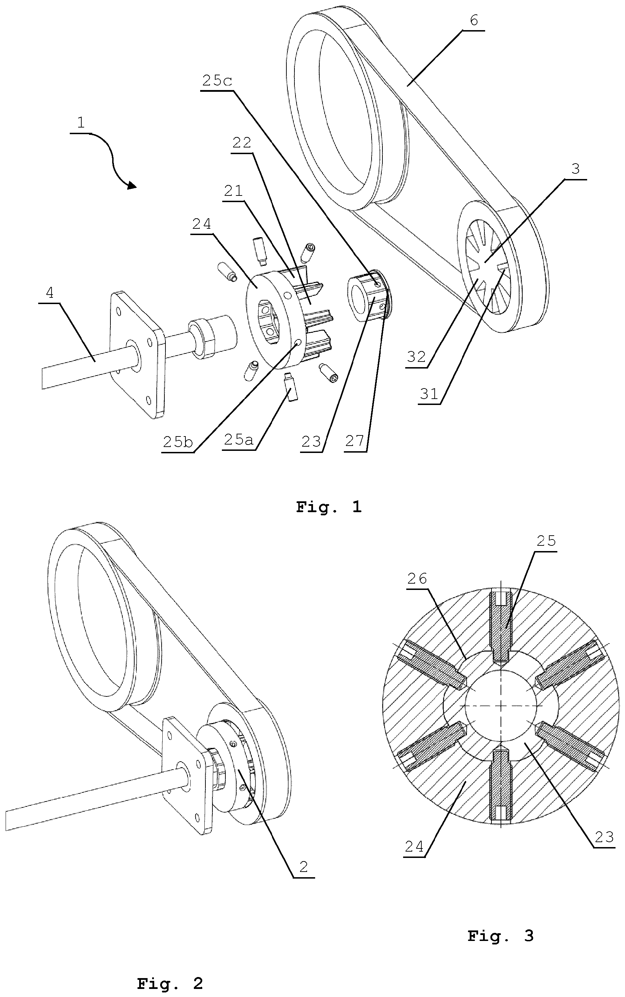

Referring to Figs. 1-5, a splitable claw coupler 1 in accordance with the preferred first embodiment of the present invention comprises a first coupling hub 2 and a second coupling hub 3 arranged axially opposite one another. The coupling hubs are fixed to the shafts 4 that transmit the torque. One is mounted to a motor shaft and the second to the transmission shaft. In accordance with the invention, the claw coupler is also arranged to drive a supercharger or a cooling pump of the engine. For this purpose, it comprises a pulley 5 that drives a transmission belt 6. In the preferred embodiment, the pulley 5 is integrated with one of the coupling hubs, for example, it can be placed on the outer circumferential surface of the hub.

Both coupling hubs 2, 3 have frontal surfaces 20, 30 which face towards one another, and from which claws 21, 31 project perpendicularly. The shape and size of the claws 21, 31 are arranged so that the opposing claws can interlock with each other. In order to do so, the claws 21, 31 are evenly spaced from each other, forming gaps 22, 32. The gaps have a shape and size tailored so that the claws projecting from the opposite disposed coupling hub can be inserted between them. In that manner, the coupling hubs 2, 3 interlock and transmit the torque. The shape and the size of the claws 21, 31 and gaps 22, 32 can also be adapted to insert an elastomer element between the coupling hubs 2, 3 to compensate for parallel, angular and axial displacements between shafts. The elastomer element is not shown in the drawings. It can have the shape of a ring with the several bodies projecting radially outwards from the ring.

In accordance with the invention the coupling hub 2 fixed to the transmission shaft 4 consists of the stationary core 23 and the detachably mounted ring 24. The core 23 is fixed to the shaft 3. The ring 24 is attached to the core 23 so that these two elements are coaxial with each other and with the axis of the shaft 4. The fixing between the core 23 and the ring 24 is detachable. With this, the ring 24 can slide along the axis of the shaft 4.

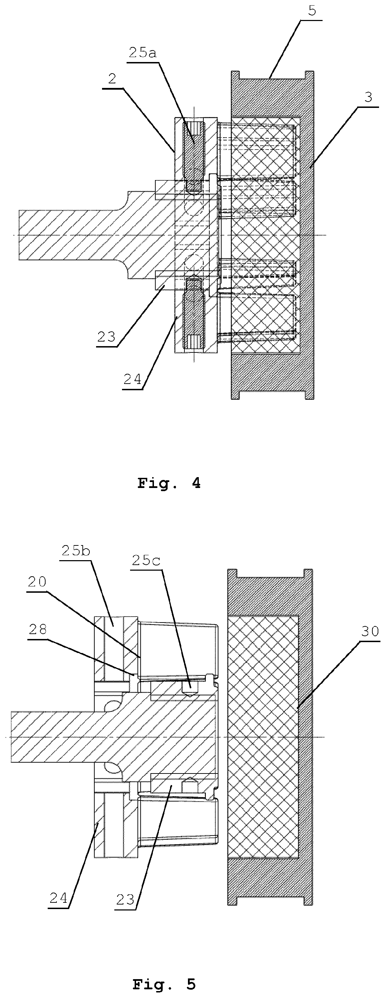

The ring 24 contains the claws 21 projecting from the frontal surface 20 of the coupling hub 2. In the default position of the ring 24 the claws 21 interlocks with claws 31 projecting from the second coupling hub 3 resulting in the connection capable of transmitting the torque. The ring 24 in the default position is shown in Fig. 4.

The core 23 and the ring 24 are attached to each other in the default position with at least one bolt connection 25. In the preferred, first embodiment the bolt connection 25 consists of six bolts 25a perpendicular to the axis of a shaft 4 and the corresponding threaded holes 25b, 25c in the core and the ring for the receiving the bolts. In order to disconnect the core 23 and the ring 24 the bolts 25a needs to be unscrew. Then the ring 24 can be move away from the from the coupling hub 3. In result the gap between the coupling hubs appears. The ring 24 in the retracted position is shown in Fig. 5.

Additionally between the core 23 and the ring 24 is the form-fitting connection 26. This additional connection strengthens the fixing between the core and the ring in the default position, counteracting torsional force resulting from the transmitted torque.

The core 23 comprises a flange 27 projecting radially outwards from its edge facing the second coupling hub 3. The flange 27 serves as a limiter that prevents the sliding of the ring 24 in both direction along the shaft axis. The ring 24 comprises the corresponding circumferential recess 28 at the edge of the frontal surface suitable for receiving the flange 27. It allows the frontal surface of the core 23 and the ring 24 to be aligned when the ring is in its default position.

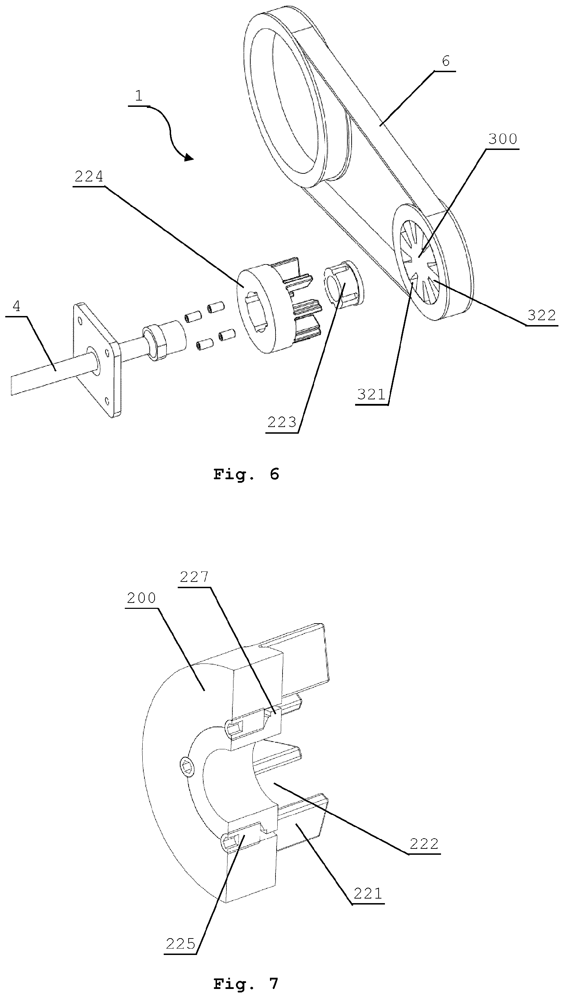

The second preferred embodiment of the splitable claw coupler 1 in accordance with the invention is shown in Fig. 6-9. Similarly like in the first embodiment the claw coupler 1 consists of two coupling hubs 200, 300 arranged axially opposite one another and fixed to the shafts 4. Both coupling hubs 200, 300 have frontal surfaces 220, 330 with projecting claws 221, 331 that interlock with each another. The claws 221, 331 are evenly spaced from each other, forming gaps 222, 332.

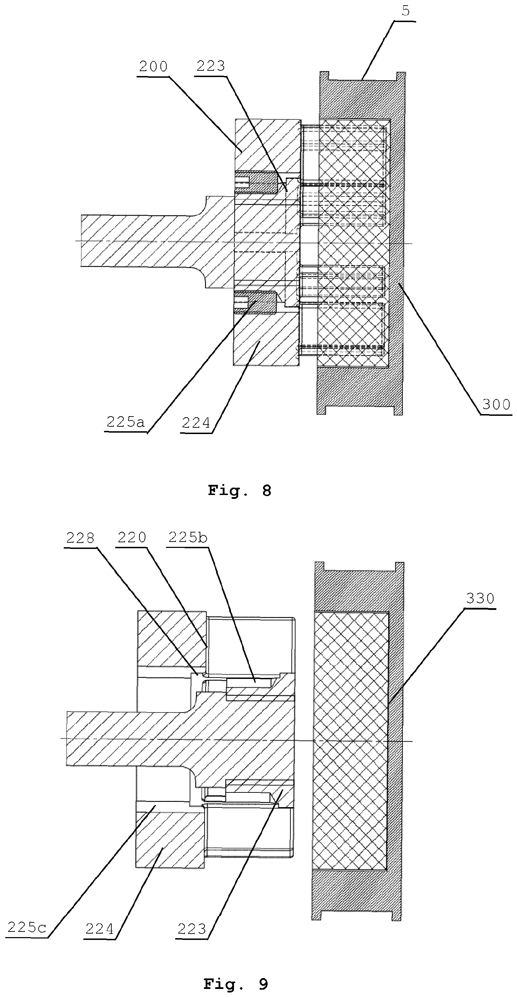

The coupling hub 200 fixed to the transmission shaft 4 consists of the stationary core 223 and the detachably mounted ring 224. The ring is arranged to slid along the axis of the shaft in the same way as in the first embodiment. The ring 224 in the default position is shown in Fig. 8, whereas Fig. 9 shows it in the retracted position.

The core 223 and the ring 224 are attached to each other in the default position with at least one bolt connection 225. This connection consists of four bolts 225a parallel to the axis of a shaft and the corresponding threaded groves 225b, 225c in the core and the ring for receiving the bolts. In order to disconnect the core 223 and the ring 224 the bolts 225a needs to be unscrew.

The core 223 contains also the flange 227 arranged for limit a movement of the ring 224. The ring 224 comprises the corresponding circumferential recess 228 at the edge of the frontal surface suitable for receiving the flange 27.

The splitable claw coupler according to the invention is especially suitable where fast and effortless disconnection of the coupler is required for repair or maintenance cases.

## Claims

1. A splitable claw coupler comprising:
two coupling hubs (2), (3), (200), (300) disposed axially opposite one another and having frontal surfaces (20), (30), (220), (330) which face towards one another and from which claws (21), (31), (221), (331) project perpendicularly,
the claws (21), (31), (221), (331) are evenly spaced from each other, forming gaps (22), (32), (222), (232) arranged for receiving the claws projecting from the opposite disposed coupling hub (2), (3), (200), (300),
the claws (21), (31), (221), (331) interlock with each another,
**characterised in that** one coupling hub (2), (200) consists of a stationary core (23), (223) and a sliding coaxial ring (24), (224) detachably mounted to the core,
the ring (24), (224) comprises the claws (21), (221) and is arranged to move relative to the core (23), (223) along the axis of a shaft (4) to which said coupling hub (2), (200) is fastened,
wherein the core (23), (223) and the ring (24), (224) are attached to each other with at least one bolt connection (25), (250).

2. The splitable claw coupler according to claim 1, wherein the bolt connection (25) consists of at least two bolts (25a) perpendicular to the axis of a shaft (4) and the corresponding threaded holes (25b), (25c) in the core and the ring for the receiving the bolts (25a).

3. The splitable claw coupler according to claim 1, wherein the bolt connection (250) consists of at least two bolts (250a) parallel to the axis of a shaft (4) and the corresponding threaded groves (250b), (250c) in the core and ring for receiving the bolts (250a).

4. The splitable claw coupler according to claim 1 or 2, wherein between the core (23) and the ring (24) is a form-fitting connection (26).

5. The splitable claw coupler according to any of the preceding claims, wherein the core (23), (230) comprises a flange (26), (260) arranged for limit a movement of the ring (24), (240) along the axis of the shaft (4).
